# EUROPÄISCHE PATENTSCHRIFT

(11) **EP 0 344 777 B1**
(45) Veröffentlichungstag und Bekanntmachung des Hinweises auf die Patenterteilung: **13.09.1995**
(21) Anmeldenummer: 89109939.2
(22) Anmeldetag: 01.06.1989
(51) Int. Cl.: F16L 41/00

(54) **Einsatzteil**
Insert
Pièce d'insertion

(30) Priorität: 01.06.1988 DE 3818612; 08.11.1988 DE 3837791
(43) Veröffentlichungstag der Anmeldung: 06.12.1989
(73) Patentinhaber: Stegmeier, Karl, D-74223 Flein (DE)
(72) Erfinder: Stegmeier, Karl, D-74223 Flein (DE)
(74) Vertreter: Müller, Hans, Dipl.-Ing.

(56) Entgegenhaltungen:
- DE-A- 2 255 493
- DE-A- 3 242 763
- DE-A- 3 330 208
- DE-C- 3 627 393

## Beschreibung

Die vorliegende Erfindung betrifft ein an ein Rohrleitungssystem angeschlossenes T-Stück mit einem Einsatzteil. Das T-Stück weist einen Stegstutzen und zwei sich gegenüberliegende stumpf an den Stegstutzen angeformte Flanschstutzen auf, wobei in jedem Anschlußbereich von Stegstutzen und Flanschstutzen eine Ein-/Auslaßöffnung vorhanden ist und das Einsatzteil im Inneren des Stegstutzens angeordnet ist. Auf der den Flanschstutzen gegenüberliegenen offenen Seite des Stegstutzens wird ein Aggregat angeschlossen. Das Einsatzteil ist derart ausgebildet, daß im Stegstutzen je ein definierter Zu- und Abflußkanal vorhanden ist, wobei durch den Zu- bzw. Abflußkanal die im Rohrleitungssystem fließende Flüssigkeit über das Aggregat geführt wird. Ferner weist das Einsatzteil in dem dem einen Flanschstutzen zugewandten Bereich eine Öffnung auf, wobei es selber und seine Dichtflächen innerhalb des Lichtraumprofils des Stegstutzens vorhanden ist.

In vielen Altbauwohnungen sind derzeit noch millionenfach zum Messen der verbrauchten Warmwassermenge die recht ungenauen Verdunstungs-Warmwasser-Kostenverteiler installiert. Diese sind an einem an ein Rohrleitungssystem angeschlossenes T-Stück angeordnet. Dieses Rohrleitungssystem ist oftmals zudem nicht extra absperrbar ausgebildet, was nach deutscher DIN-Vorschrift aber vorgeschrieben ist. Eine wesentlich höhere Genauigkeit der Verbrauchsmessung als mit den herkömmlichen Verdunstungsgeräten wird mit geeichten Wasseruhren erzielt. Deshalb ist man bstrebt, die Verdunstungsgeräte durch Wasserzähler zu ersetzen, wobei jedoch ein hoher Renovierungsaufwand vermieden werden soll, d. h. ein Anschluß der Wasseruhr direkt an das T-Stück möglich sein muß. Dies wird dadurch erreicht, daß in den Stegstutzen des T-Stücks ein Einsatzteil eingeführt wird, das entsprechend der vorgegebenen Ein-/Austrittsöffnung der Wasseruhr ausgebildet ist. Derartige Einsatzteile müssen ein Vermischen der zu- bzw. abfließenden Wassermenge innerhalb des T-Stücks vermeiden, um die Genauigkeit der Verbrauchsmessung zu gewährleisten.

### STAND DER TECHNIK

Ein als Spritzgußteil ausgebildetes Einsatzteil ist aus der DE-PS 28 36 484 bekannt. Es weist eine kreisförmige Grundplatte auf, an die ein rechtwinklig durch den Mittelpunkt der Kreisplatte verlaufender Steg angeformt ist. Rechtwinklig zum Steg und zu der Grundplatte sind zu beiden Seiten des Steges je zwei Wangen angeformt, wobei der Steg und die Wangen derartige Querschnittsabmessungen aufweisen, daß sie nicht über die kreisförmige Grundplatte hinausragen. Die freien Endkanten der Wangen, die in eingesetztem Zustand die Dichtkanten des Einsatzteiles bilden, sind entsprechend dem kreisförmigen Stegstutzeninneren abgeschrägt. Der Abstand von zwei auf einer Stegseite angeordneten Wangen wird durch den Durchmesser der im Anschlußbereich von Steg- und Flanschstutzen vorhanden Ein-/ Auslaßöffnungen bestimmt. Dieses bekannte Einsatzteil ist zum Anschluß von einer Wasseruhr vorgesehen. Ein Anschluß eines Absperrventils ist mit diesem Einsatzteil nicht möglich.

Das Einsatzteil wird mit der Grundplatte zuerst in das Stegstutzeninnere eingeführt. Im eingesetzten Zustand ist der Steg des Einsatzteiles rechtwinklig zur Längsachse der Flanschstutzen angeordnet. Es entstehen somit je ein, nahezu rechteckförmiger Zu- bzw. Abflußkanal. Die Wasseruhr, die anschließend an das T-Stück angeflanscht wird, weist entsprechende Ein- bzw. Auslaßöffnungen auf.

Ein Nachteil eines derartigen Einsatzteiles ist darin zu sehen, daß die freien Endkanten der Wangen, die ja im eingesetzten Zustand die Dichtkanten bilden, beim Einsetzen des Einsatzteiles an der Wandung des Stegstutzens entlangschleifen. Bedenkt man, daß diese T-Stücke als Gußstücke gefertigt werden und mitunter scharfe Gratkanten aufweisen, können sich durch den Schleifvorgang die Dichtkanten abhobeln, was sich ungünstig auf deren Dichtheit auswirkt. Hinzu kommt, daß in eingesetztem Zustand des Einsatzteils die Dichtkanten nicht planmäßig an die Innenwandung des Stegstutzens angepreßt werden, was deren Dichtheit ebenfalls abträglich ist. Die Gefahr einer zumindest teilweisen Vermischung der zu-bzw. abfließenden Wassermenge ist bei einem derartigen Einsatzteil durchaus gegeben.

Weiterhin wirkt sich negativ aus, daß der Durchflußwiderstand durch das Stegstutzeninnere erhöht wird, da infolge der nahezu rechteckförmigen Ausbildung des Zu- bzw. Abflußkanals innerhalb des kreisförmigen Stegstutzeninneren zwei Kappenbereiche entstehen, die nicht planmäßig von Wasser durchflossen werden.

Um ein günstiges Durchflußverhalten zu erzeugen, ist es bei dem bekannten Einsatzteil erforderlich, daß im Anschlußbereich des Einsatzteiles und der Wasseruhr der nahezu rechteckförmige Zu- bzw. Abflußkanal des Einsatzteiles exakt auf der entsprechenden Ein- bzw. Auslaßöffnung der Wasseruhr angeordnet ist. Dies läßt sich in der Regel in der Praxis nicht erreichen. So entstehen bei geringfügiger Verdrehung zwischen Einsatzteil und der Ein- bzw. Austrittsöffnung der Wasseruhr Kanten, die zur Verwirbelung des Wassers in diesem Bereich führen, wodurch der Durchlaßwiderstand erhöht wird. Bei genügend großer Relativverdrehung zwischen Einsatzteil und Wasseruhr besteht ebenfalls die Gefahr der Vermischung der zu- bzw. abfließenden Wassermenge.

Ein an ein Rohrleitungssystem angeschlossenes T-Stück mit einem Einsatzteil gemäß dem Oberbegriff des Patentanspruchs 1 ist aus der DE-C-3 627 393 bekannt. Das danach bekannte Anschlußteil zur Verbindung eines Wasserzählers mit einem T-förmigen Rohranschluß wird in ein T-Stück eingesetzt, das im Bereich des Anschlusses des Stegstutzens an die Flanschstutzen eine Querschnittsverengung mit Stegwandbereichen aufweist. Das Anschlußteil ist L-förmig ausgebildet mit einem kurzen, einen Dichtkörper tragenden Schenkel. Der Dichtkörper liegt im eingesetzten Zustand an dem durchgehenden Teil des Rohranschlusses an. Um das Anschlußteil in seiner eingesetzten Lage zu fixieren, ist zusätzlich ein teleskopartig zwischen einer Einsatzstellung und einer Klemmstellung bewegbares Zusatzrohr vorhanden, das eine nach außen vorspringende Nockenfläche aufweist. Die Nockenfläche befindet sich in der Einsetzstellung außerhalb des Querstutzens des Rohranschlusses und in der Klemmstellung in Eingriff mit der Innenfläche des Querstutzens. Das Anordnen des zusätzlichen verschiebbaren Bauteils erfordert zusätzliche bauliche Maßnahmen, um die Verschieblichkeit zu gewährleisten. Sobald jedoch verschiebliche Teile an derartigen Einsatzteilen vorhanden sind, ist mit zusätzlichen Dichtproblemen zu rechnen. Bei diesem vorbekannten Anschlußteil wird ein ringförmiger Dichtkörper eingesetzt, der in einer Ebene senkrecht zur Durchflußrichtung vorhanden ist. Dadurch können sich Dichtprobleme ergeben, da dieser ringförmige Dichtkörper nicht pressend gegen die entsprechenden Dichtflächen angedrückt wird.

Aus der DE-A-3 242 763 ist ein Adapter für einen Ventilzähler bekannt, der in ein T-Stück-förmiges Gehäuse eingesetzt wird, das keine in das Innere der Flanschstutzen weisende Stegewandbereiche aufweist. Statt dessen ist bei diesem T-Stück ein Ventilsitz vorhanden, an dem bei eingesetztem Zustand des Adapters eine Endfläche dichtend anliegt. Dies hat zur Folge, daß die Endfläche des Adapters exakt bearbeitet werden muß, um ihre Dichtfunktion zu gewährleisten. Diese Dichtfunktion kann jedoch nur im unteren Bereich der Flanschstutzen gewährleistet werden, da im oberen Bereich die nach oben offene Durchgangsöffnung vorhanden ist. In diesem oberen Bereich ist eine Rastnase vorhanden, die den Adapter in eingesetztem Zustand in seiner Lage fixiert. Im Bereich dieser Rastnase ist es schwierig, für einen dichtenden Abschluß zu sorgen, da die Bauteilabmessungen der Rastnase und die Geometrie der sich überschneidenden Öffnungen eine Abdichtung mit Dichtmitteln nur schwer zulassen. Als weiterer Nachteil kommt hinzu, daß der Adapter, nachdem er in das T-Stück eingesetzt worden ist, nicht mehr oder nur mit einem nicht vertretbaren Aufwand ausgetauscht werden kann, da die Rastnase ein Entfernen des Adapters aus dem T-Stück verhindert.

Der Erfindung liegt die Aufgabe zugrunde, ein Einsatzteil anzugeben, das einfach, schnell und flüssigkeitsdicht in ein T-Stück eingesetzt werden kann.

Das erfindungsgemäße Einsatzteil ist durch die Merkmale des Anspruchs 1 gegeben.

Diese Erfindung zeichnet sich ausgehend vom vorstehend genannten Stand der Technik dementsprechend dadurch aus, daß das Dichtmittel des Einsatzteils am stirnseitigen Rand des Stutzens angeordnet und gegen den die Öffnung umgebenden Stegwandinnenbereich anpreßbar ist und daß das Einsatzteil und seine Dichtflächen innerhalb des Lichtraumprofils des Stegstutzens vorhanden sind. Ein derartiges Einsatzteil weist die aus dem Stand der Technik bekannten Nachteile nicht auf. Es läßt sich wirtschaftlich einfach herstellen, leicht und problemlos einbauen und besitzt eine sehr gute Funktion, da seine Dichtwirkung einwandfrei ist.

Ein derartiges Einsatzteil hat nämlich den Vorteil, daß bei seinem Einsetzen die Dichtmittel nicht an der Innenwand des Stegstutzens entlangschleifen, wodurch eine Verletzung dieser Dichtmittel , die eine eventuelle Undichtigkeit zur Folge hätten, vermieden wird. Eine erhöhte Sicherheit gegen Undichtigkeit wird ferner dadurch erzielt, daß das die seitliche Öffnung umgebende Dichtmittel planmäßig gegen die Innenwand des Stegstutzens angepreßt wird. Ferner weist ein derartiges Einsatzteil durch seine kreisförmige Durchflußführung einen sehr geringen hydraulischen Querschnitt und damit sehr geringe Leitungsverluste auf. Seine Anordnung innerhalb des Lichtraumprofils des Stegstutzens erlaubt eine einfache Montage bzw. Demontage des Einsatzteils.

In einer bevorzugten Ausgestaltung der Erfindung ist die Arretiereinrichtung an der unteren Abschlußplatte des Einsatzteiles gegenüber der seitlichen Öffnung angeordnet und an dem über die Ein-/Auslaßöffnungen hinausragenden Stegwandbereich abstützbar. Mit dieser Maßnahme ist eine konstruktiv einfache Ausgestaltung der Arretiereinrichtung möglich. In vorteilhafter Art und Weise ist die Arretiereinrichtung als Spreizeinheit mit einer Spreizschraube ausgebildet. Beim Einbau des Einsatzteils wird dasselbe entlang der Längsachse des Stegstutzens eingeführt. Nachdem die Stirnseite des Rohrprofiles an der Innenwandung des T-Stücks zum Anliegen gekommen ist, wird die von der offenen Seite des Stegstutzens zugängliche Spreizschraube gedreht. Dadurch spreizt sich die als Arretiereinrichtung ausgebildete Spreizeinheit auseinander. Dabei stützt sich die Spreizeinheit auf den über die Ein-/Auslaßöffnung hinausragenden Stegwandbereich ab, wodurch das Einsatzteil in seiner Lage arretiert wird und gleichzeitig das Dichtmittel an die Innenwandung des Stegstutzens gepreßt wird.

Nach einem weiteren Merkmal der Erfindung ist die Arretiereinrichtung als Exzentereinheit mit einer exzentrisch drehbar angeordneten Exzenterscheibe ausgebildet, wobei die Drehachse der Exzenterscheibe parallel zur Rohrprofillängsachse des Einsatzteiles angeordnet ist. Durch einfaches Drehen der von der offenen Seite des Stegstutzens zugänglichen Exzenterscheibe wird eine Arretierung des Einsatzteils im Stegstutzen erzielt.

In einer weiteren Ausgestaltung der Erfindung ist die Arretiereinrichtung als Keileinheit mit einem eindrückbaren Keil ausgebildet. Dieser Keil ist zwischen dem über die Ein-/Auslaßöffnung hinausragenden Stegwandbereich und der diesem Stegwandbereich zugewandten Seite der unteren Abschlußplatte eindrückbar. Vorteilhafterweise weist der Keil eine Rastnase auf, derart, daß bei eingedrücktem Keil diese Rastnase in eine entsprechende Ausnehmung des Einsatzteiles eingreift und dadurch der Keil in seiner Lage gesichert ist.

Besonders vorteilhaft ist die Arretiereinrichtung als am Einsatzteil elastisch drehbar gelagerte Zungeneinheit ausgebildet, die einstückig mit dem Einsatzteil verbunden ist. Hierbei sind zwei Varianten zu unterscheiden. Bei der ersten Variante ist die elastisch drehbare Zungeneinheit derart angeordnet, daß sie mit dem Einsatzteil einen spitzen Winkel bildet. Nach dem Einsetzen des Einsatzteiles wird diese Zungeneinheit von oben zwischen dem über die Ein-/Auslaßöffnung hinausragenden Stegwandbereich und dem Einsatzteil eingepreßt, wodurch sich das gesamte Einsatzteil im Innern des Stegstutzens verspannt und dadurch arretiert ist. Um ein gutes Einpressen der Zungeneinheit zu gewährleisten, ist in vorteilhafter Art und Weise der freie Endbereich der Zungeneinheit ausgerundet.

Bei der zweiten Variante ist die Zungeneinheit in einem stumpfen Winkel gegenüber dem Einsatzteil angeordnet. Der konstruktive Aufbau der Zungeneinheit ist identisch mit der der ersten Variante. Die Zungeneinheit der zweiten Variante verspannt sich beim Einführen des Einsatzteiles von selbst. Dies wird dadurch erreicht, daß die Zungeneinheit bevor das Ersatzteil seine Einbaulage erreicht hat, mit dem über die Ein-/Auslaßöffnung hinausragenden Stegwandbereich in Kontakt kommt. Beim weiteren Einführen des Einsatzteils verspannt sich diese Zungeneinheit zwischen dem hinausragenden Stegwandbereich und dem Einsatzteil bis dasselbe seine Endlage erreicht hat.

Nach einem weiteren Merkmal der Erfindung verfügt das Einsatzteil über eine im Bereich der inneren Stirnseite des Stegstutzens angeordnete Grundplatte, die eine im Bereich der Arretiereinrichtung vorhandene Konsole aufweist, wobei die Konsole eine zur Arretiereinrichtung hin abfallende schräge Fläche und die Arretiereinrichtung eine entsprechend ausgebildete Gegenfläche besitzt, derart, daß beim Einsetzen des Einsatzteiles neben einer Bewegung in Richtung der Längsachse des Stegstutzens auch eine Bewegung in Richtung der Längsachse der Flanschstutzen entsteht. Besonders vorteilhaft weist die Konsole der Grundplatte eine Rastkante und die Arretiereinrichtung eine entsprechende Rastnut auf, wobei Rastkante und Rastnut bei eingesetztem Einsatzteil in Eingriffstellung kommen, wodurch ein Lösen der Verbindung Grundplatte/Einsatzteil verhindert wird.

In vorteilhafter Art und Weise ist das Dichtmittel im Bereich um die seitliche Öffnung angeordnet, wobei bevorzugt das Dichtmittel als O-Ring ausgebildet ist, wodurch ein hoher Grat an Dichtigkeit erzielt wird, oder in einer weiteren bevorzugten Ausgestaltung ist das Dichtmittel als Lippendichtung ausgebildet, was sich konstruktiv besonders einfach verwirklichen läßt.

Besonders gute Dichtergebnisse lassen sich erzielen, wenn die Arretiereinrichtung als starre Rechteckkonsole ausgebildet ist, die an die untere Abschlußplatte angeformt ist, und wenn innerhalb des seitlichen Stutzens eine entlang der Längsachse der Flanschstutzen verschiebbare, flüssigkeitsdicht gelagerte Hülse angeordnet ist, wobei diese Hülse die seitliche Öffnung bildet und an der Hülse auf der dem Rohrprofil des Einsatzteiles zugewandten Innenseite der Hülse ein Steg angeordnet ist, an den eine Federzunge anschließt, die auf der der seitlichen Öffnungen gegenüberliegenden Innenseite des Rohrprofils des Einsatzteiles abstützbar ist.

Die Erfindung wird im folgenden anhand der in der Zeichnung dargestellten Ausführungsbeispiele näher beschrieben und erläutert. Es zeigen:
- Fig. 1: perspektivische Ansicht eines ersten Ausführungsbeispiels eines Einsatzteiles mit einer als Dreieckkonsole ausgebildeten Arretiereinrichtung, einem seitlichen Stutzen mit Querschnittsverstärkung, im Randbereich der seitlichen Öffnung angeordneten Wülsten und einen um diesen Bereich herum angeordneten O-Ring,
- Fig. 2: Draufsicht auf ein in ein T-Stück eingesetztes Einsatzteil gemäß Fig. 1 und eine Verbindungseinheit,
- Fig. 3: Schnitt durch ein Einsatzteil gemäß Fig. 1, rechtwinklig zur Stegstutzenachse und durch die Flanschstutzenachse verlaufend,
- Fig. 4: Schnitt durch das eingesetzte Einsatzteil gemäß Fig. 2 in einer durch die Stegstutzenlängsachse und die Flanschstutzenlängsachse definierten Ebene gelegen,
- Fig. 5: Ansicht eines eingesetzten Einsatzteils gemäß Fig. 4 mit Blickrichtung auf den seitlichen Stutzen mit seitlicher Öffnung,
- Fig. 6: Schnitt durch die Stegstutzenlängsachse und die Flanschstutzenlängsachse eines zweiten Ausführungsbeispiels, wobei das Einsatzteil eine als Exzentereinrichtung ausgebildete Arretiereinrichtung aufweist,
- Fig. 7: Schnitt rechtwinklig zur Stegstutzenlängsachse und durch die Flanschstutzenlängsachse eines Einsatzteils gemäß Fig. 6,
- Fig. 8: Schnitt durch die Stegstutzenachse und Flanschstutzenachse eines dritten Ausführungsbeispiels, wobei das Einsatzteil eine als Keileinrichtung ausgebildete Arretiereinrichtung aufweist,
- Fig. 9: Schnitt rechtwinklig zur Stegstutzenlängsachse und durch die Flanschstutzenlängsachse eines Einsatzteils gemäß Fig. 8,
- Fig. 10: Schnitt durch die Stegstutzenlängsachse und die Flanschstutzenlängsachse eines vierten Ausführungsbeispiels, wobei das Einsatzteil eine als elastische Zungeneinheit ausgebildete Arretiereinrichtung weist,
- Fig. 11: Schnitt rechtwinklig zur Stegstutzenachse und durch die Flanschstutzenachse eines Einsatzteils gemäß Fig. 11,
- Fig. 12: Schnitt durch die Stegstutzenachse und die Flanschstutzenachse eines fünften Ausführungsbeispiels, wobei das Einsatzteil über eine Grundplatte mit Konsole mit einer schrägen Fläche verfügt, wobei die Arretiereinrichtung eine entsprechend ausgebildete Gegenfläche besitzt,
- Fig. 13: Schnitt rechtwinklig zur Stegstutzenlängsachse und durch die Flanschstutzenachse eines Einsatzteils gemäß Fig. 12,
- Fig. 14: Schnitt durch die Stegstutzenachse und die Flanschstutzenachse eines T-Stückes mit Einsatzteil, wobei der obere Bereich des Rohrprofils des Einsatzteiles ein Zwischenstück und eine Verbindungseinheit dargestellt sind,
- Fig. 15: Schnitt rechtwinklig zur Stegstutzenlängsachse durch das Zwischenstück gemäß Fig. 14,
- Fig. 16, Fig. 17: Schnitt durch die Stegstutzenachse und die Flanschstutzenachse eines sechsten Ausführungsbeispieles, wobei das Einsatzteil eine als Hakeneinheit ausgebildete Arretiereinrichtung aufweist, die oberhalb (Fig. 16) bzw. unterhalb (Fig. 17) der Flanschstutzenachse im Randbereich der seitlichen Öffnung angeordnet ist,
- Fig. 18: Schnitt durch die Stegstutzenachse und die Flanschstutzenachse eines T-Stückes mit Einsatzteil und einer Verbindungseinheit mit Öffnungen zum Anschließen derselben an das T-Stück,
- Fig. 19: Schnitt durch die Stegstutzenachse und die Flanschstutzenachse eines siebten Ausführungsbeispieles, wobei das Einsatzteil eine als einsetzbares Formteil ausgebildete Arretiereinrichtung aufweist, und
- Fig. 20: Schnitt rechtwinklig zur Stegstutzenlängsachse und durch die Flanschstutzenachse eines Einsatzteils gemäß Fig. 19.

### WEGE ZUM AUSFÜHREN DER ERFINDUNG

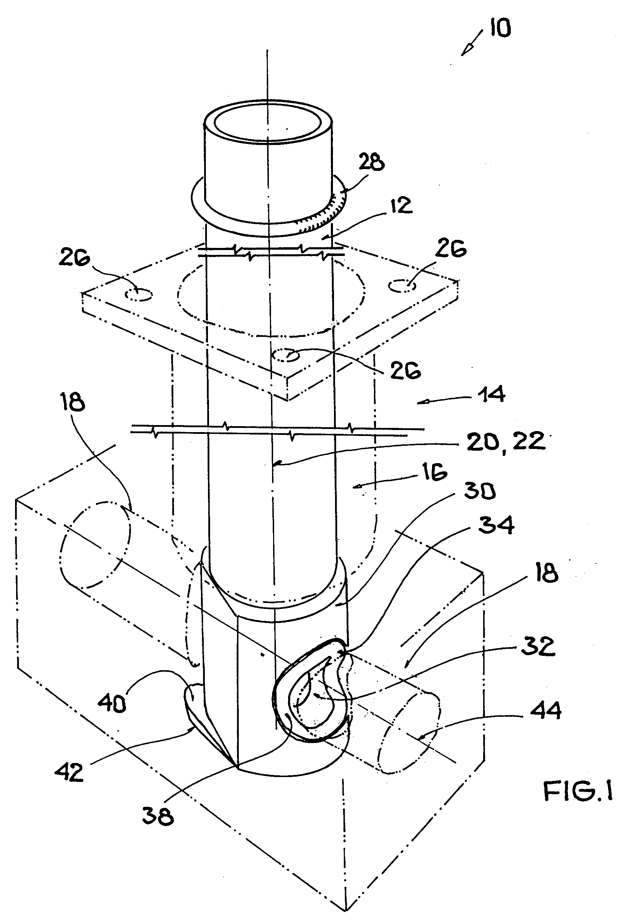

Wie in Fig. 1 zu erkennen, ist in einem ersten Ausführungsbeispiel das Einsatzteil 10 als Rohrprofil 12 ausgebildet, wobei das Einsatzteil 10 innerhalb eines, in Fig. 1 nur angedeuteten T-Stückes 14 mit einem Stegstutzen 16 und zwei sich gegenüberliegende stumpf an den Stegstutzen 16 angeformte Flanschstutzen 18. Das Einsatzteil 10 ist hierbei so angeordnet, daß dessen Längsachse 20 mit der Längsachse 22 des Stegstutzens 16 zusammenfällt. Am offenen Ende des Stegstutzens 16 ist an demselben ein quadratischer Flansch 24 angeformt, der in jedem Eckbereich je eine Gewindebohrung 26 aufweist.

Der aus dem Stegstutzen 16 des T-Stücks 14 herausragende obere Endbereich des Rohrpofils 12 ist offen. In der Wandung des oberen Endbereichs ist ein O-Ring 28 angeordnet. Die untere Stirnseite des Rohrprofiles 12 weist eine untere Abschlußplatte auf. Im unteren Endbereich des Rohrprofiles 12 ist ein seitlicher Stutzen 30 mit einer nockenartigen Querschnittsverstärkung und einer seitlichen Öffnung 32 angeordnet. Um den Randbereich der seitlichen Öffnung 32 herum ist ein Wulst 34 vorhanden. Im Randbereich um die seitliche Öffnung 32 herum ist in der Wandung des seitlichen Stutzens 30 ein O-Ring 38 angeordnet.

Das Einsatzteil 10 wird in das T-Stück 14 so eingesetzt, daß im eingebauten Zustand die seitliche Öffnung 32 einer Ein-/Auslaßöffnung eines Flanschstutzens 18 gegenüberliegt. In dem der seitlichen Öffnung 32 gegenüberliegenden unteren Endbereich des Einsatzteils 10 befindet sich eine an die untere Abschlußplatte 42 des Einsatzteiles angeformte Arretiereinrichtung, die als Dreieckkonsole 40 ausgebildet ist. Die untere Abschlußplatte 42 des Einsatzteiles 10 weist in Richtung der Längsachse 44 der Flanschstutzen 18 eine Neigung auf, derart, daß der Winkel zwischen unterer Abschlußplatte 42 und der Längsachse 22 des Rohrprofiles 12 um wenige Grade größer als 90 Grad ist, gemessen im Uhrzeigersinn.

Das flüssigkeitsdichte Anlegen der seitlichen Öffnung 32 an die Ein-/Auslaßöffnung in einem Flanschstutzen 18 wird dadurch erzielt, daß sich die Dreieckkonsole 40 im eingebauten Zustand des Einsatzteiles 10 gegen in Fig. 1 nicht dargestellte innere Stegwandbereiche verspannt und somit den die seitliche Öffnung 32 umgebenden O-Ring 38 an den die Ein-/Auslaßöffnung umgebenden Stegwandinnenbereich anpreßt.

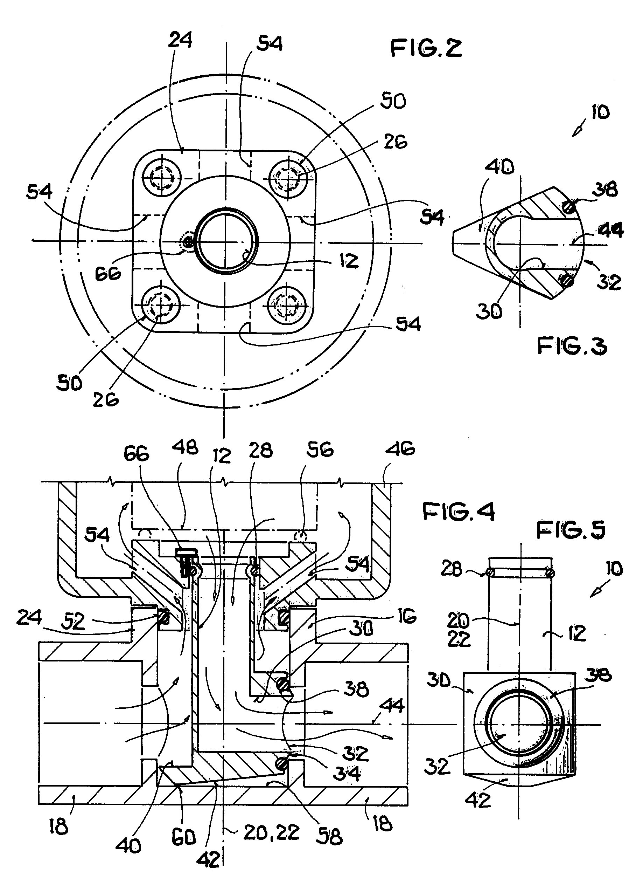

In den Fig. 2 bis 5 ist das Einsatzteil 10 in eingesetztem Zustand eines T-Stückes 14 zu erkennen. Die anhand von Fig. 1 bereits erläuterten Merkmale tragen in den Fig. 2 bis 5 dasselbe Bezugszeichen und werden nicht nochmals beschrieben.

Auf den quadratischen Flansch 24 des Stegstutzens 16 ist eine Verbindungseinheit 46 zu einem im oberen Bereich von Fig. 4 nur gestrichelt angedeutetem Aggregat 48 angeordnet. Die Verbindung des quadratischen Flansches 24 des Stegstutzens 16 erfolgt über vier Schrauben 50, die in die entsprechenden Gewindebohrungen 26 des quadratischen Flansches 24 eingeschraubt sind. Für die Flüssigkeitsdichtigkeit dieser Verbindung sorgt ein im Bereich der Innenkante des Flansches 24 angeordneter O-Ring 52. In Fig. 4 ist die Fließrichtung des Wassers durch Pfeile angegeben. Zunächst fließt das Wasser dem linken Stegstutzen 18 zu. Sodann steigt es im Bereich zwischen Steginnenwand des Stegstutzens 16 und Außenwand des Rohrprofiles 12 innerhalb des Stegstutzens nach oben. In der an den Stegstutzen 16 anschließenden Verbindungseinheit 46 sind Durchlaßöffnungen 54 vorhanden, die die ankommende Wassermenge in die äußeren Randbereiche innerhalb der Verbindungseinheit 46 verteilen. Von diesen äußeren Randbereichen fließt das Wasser über nicht dargestellte Einlaßöffnungen in das Aggregat 48 hinein, welches daraufhin beispielsweise mittels eines Flügelrades die durchfließende Wassermenge mißt. Das Aggregat 48 weist eine nicht näher dargestellte Austrittsöffnung auf, die gegenüber den äußeren Bereichen der Verbindungseinheit mittels eines O-Ringes 56 abgedichtet ist. Die abfließende Wassermenge wird in das Innere des Rohrprofiles 12 geführt. Auch das Rohrprofil 12 ist in seinem in die Verbindungseinheit 46 hineinragenden Endbereich gegenüber der Verbindungseinheit 46 mittels eines O-Ringes 28 flüssigkeitsdicht eingedichtet. Die Wassermenge fließt im Rohrinneren des Rohrprofils 12 nach unten und tritt schließlich durch die seitliche Öffnung 32 in den Bereich des rechten Flanschstutzens 18 ein.

Das Einsetzen des Einsatzteiles 10 in das T-Stück 14 wird bei noch nicht aufgeschraubter Verbindungseinheit 46 durchgeführt. Das Einsatzteil 10 wird nun so eingeführt, daß während der Einführbewegung die untere Abschlußplatte 42 des Einsatzteiles 10 parallel zur Innenfläche 58 der unteren Abschlußplatte 42 des Stegstutzens 16 verläuft. Liegt die untere Abschlußplatte 42 an der Innenseite 58 an, wird das Einsatzteil 10 entgegen dem Uhrzeigersinn um die von unterer Abschlußplatte 42 und der Dreieckskonsole 40 gebildeten unteren Kante 60 gedreht. Gleichzeitig stützt sich bei dieser Drehung die freie Kante 62 der Dreieckskonsole 40 an einen in das Innere des T-Stückes 14 hineinragenden Stegwandbereich 64 ab, wobei die freie Kante 62 an dem inneren Stegwandbereich 64 abgleitet und damit eine Verschiebung der unteren Kante 60 in Richtung der seitlichen Öffnung 32 bewirkt. Aufgrund dieser Verschiebung greift der im Randbereich der seitlichen Öffnung 32 vorhandene Wulst 34 in die Öffnung des rechten Flanschstutzens 18 ein, wobei gleichzeitig der O-Ring 38 gegen die die Öffnung des rechten Flanschstutzens umgebenden inneren Stegwandbereiche gepreßt wird. In seiner Endlage ist somit das Einsatzteil innerhalb des Stegstutzens 16 verspannt und die seitliche Öffnung 32 liegt flüssigkeitsdicht an der Öffnung des rechten Flanschstutzens 18 an.

Zur Lagesicherung des Einsatzteiles im eingebauten Zustand wird nach dem Verschrauben der Verbindungseinheit 46 mit dem T-Stück 14 im Bereich der offenen Stirnseite des Rohrprofiles 12 in die Verbindungseinheit 46 ein Sicherungsstift 66 eingeschraubt, wobei der Sicherungsstift 66 eine kopfseitige Sicherungsplatte aufweist, die die freie Endkante des Rohrprofiles 12 übergreift und somit eine Bewegung des Einsatzstückes in Richtung seiner Längsachse 20 verhindert. Danach wird das Aggregat 48 flüssigkeitsdicht eingesetzt. Das Innere des Rohrprofiles 12 ist gegenüber der Verbindungseinheit 46 mittels einem im freien Endbereich des Rohrprofiles 12 angeordneten O-Rings 28 abgedichtet. Dieser O-Ring 28 sitzt in der Wandung des Rohrprofiles 12. Nun kann die durchfliessende Wassermenge exakt bestimmt werden, ohne daß irgendwelche Vermischungen zwischen zu- und abfließender Wassermenge stattfinden.

Im oben dargestellten Ausführungsbeispiel ist der Durchflußstrom ausgehend von einer im Rohrleitungssystem von links nach rechts fließenden Wassermenge dargestellt. Umgekehrt ist es jedoch ebenfalls möglich, daß im Rohrleitungssystem eine Fließrichtung von rechts nach links herrscht. Auch für einen derartigen Fall ist das Anordnen des oben beschriebenen Einsatzteiles 10 möglich.

Wird ein Aggregat verwendet, das seine Einlaßöffnung nicht wie im oben beschriebenen Fall auf der Außenseite sondern zentral über dem Inneren des Rohrprofiles 12 hat, wie beispielsweise ein Absperrventil, so ist das Einsatzteil 10 lediglich um 180 Grad um seine Längsachse 20 zu drehen, um eine funktionsfähige Durchflußmengenmessung bei Fließrichtung des Wassers von links nach rechts zu gewährleisten.

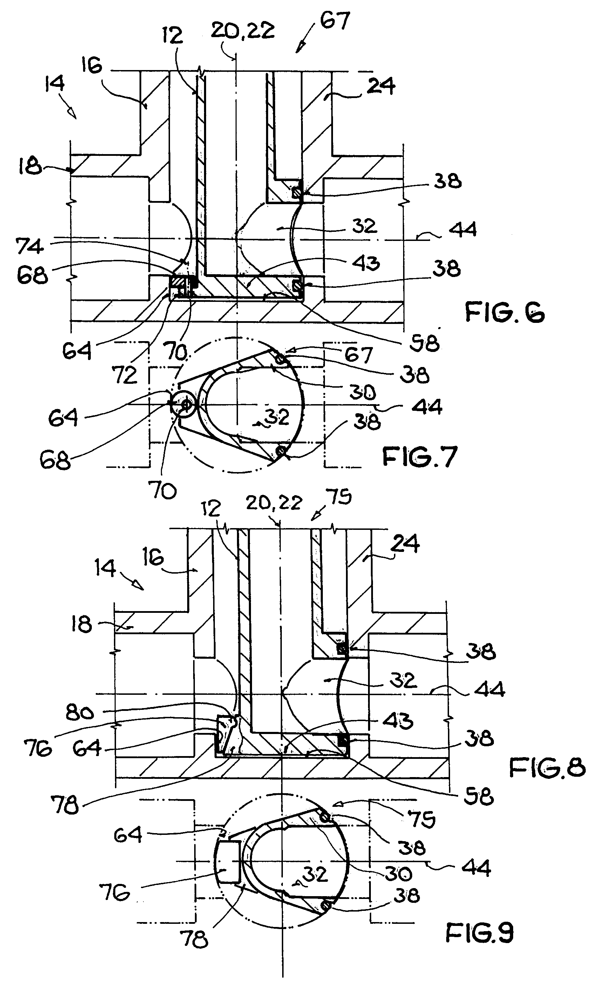

Die in den Fig. 6 bis 13 dargestellten weiteren Ausführungsbeispiele unterscheiden sich gegenüber dem oben beschriebenen Ausführungsbeispiel in ihrer konstruktiv andersartigen Ausbildung der der seitlichen Öffnung 32 gegenüberliegenden, an der unteren Stirnseite des Einsatzteiles angeordneten Arretiereinrichtung. Bei diesen Ausführungsbeispielen wird das Einsatzteil derart in das T-Stück 14 eingeführt, daß während des Einführvorgangs die Längsachse 20 des Einsatzteiles parallel zur Längsachse 22 des Stegstutzens 16 verläuft und die Stirnseite der unteren Abschlußplatte 43 des Einsatzteiles rechtwinklig zur Längsachse 20 angeordnet ist. Ein weiterer Unterschied der Ausführungsbeispiele gemäß den Fig. 6 bis 13 gegenüber dem oben beschriebenen Ausführungsbeispiel besteht darin, daß der die seitliche Öffnung 32 umgebende Wandbereich des seitlichen Stutzens 30, in dem der O-Ring 38 angeordnet ist, parallel zu dem die Öffnung des Flanschstutzens 18 umgebenden Stegstutzeninnenwandbereiches verläuft.

Wie in Fig. 6 und 7 zu erkennen, ist die Arretiereinrichtung bei dieser Ausführungsform des Einsatzteiles 67 als Exzentereinheit ausgebildet. Hierzu weist die Arretiereinrichtung eine Exzenterscheibe 68, einen Führungsstift 70 und eine an die untere Abschlußplatte 42 des Einsatzteiles 67 angeformte Rechteckkonsole 72 auf. Der Führungsstift 70 ist in einer entsprechenden Bohrung der Rechteckkonsole 72 angeordnet und ragt über dieselbe innenseitig hinaus. In diesem hinausragenden Bereich des Führungsstiftes 70 greift die Exzenterscheibe 68 derart ein, daß dieselbe um die parallel zur Längsachse 20 des Einsatzteiles verlaufende exzentrisch zum Mittelpunkt der kreisförmigen Exzenterscheibe 68 angeordnete Drehachse 74 drehbar gelagert ist. Nach dem Einsetzen des Einatzteiles 67 in das T-Stück 14 ist die Exzentereinheit noch von oben zugänglich. Zum Verspannen des Einsatzteiles 10 in dem T-Stück 14 wird nun die Exzenterscheibe 68 um ihre Drehachse 74 gedreht, was beispielweise mittels eines Schraubenziehers durchgeführt werden kann, der hierzu in einer auf der Oberseite der Exzenterscheibe 68 angeordneten Schlitz eingreift.

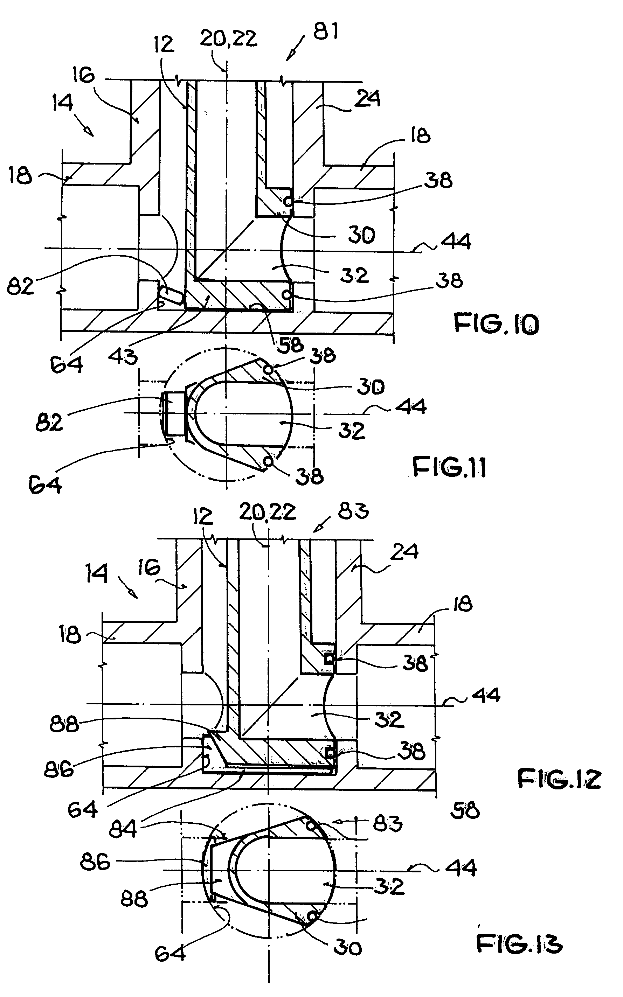

Gemäß den Fig. 8 und 9 ist die Arretiereinrichtung einer weiteren Ausbildung eines Einsatzteils 75 bei diesem Ausführungsbeispiel als Keileinheit mit einem Keil 76 ausgebildet. An die untere Abschlußplatte 42 ist im Bereich des Keiles 46 eine Konsole 78 angeformt, die auf ihrer Stirnseite eine geneigte Fläche aufweist. Der Keil 76 ist im eingesetzten Zustand des Einsatzteiles 10 zwischen die geneigte Fläche der Konsole 78 und dem inneren Stegwandbereich 64 eindrückbar. Mit dem Eindrücken des Keiles 76 verspannt sich das Einsatztei 75 im T-Stück 14. Zur Lagesicherung des Keiles 76 weist derselbe eine Rastnase 80 auf, die bei eingedrücktem Keil in eine auf der Stirnseite der Konsole 78 angeordnete Ausnehmung einrastet.

Gemäß einem vierten Ausführungsbeispiel eines Einsatzteiles 81 ist in Fig. 10 zu erkennen, daß die Arretiereinheit als drehbar gelagerte Zungeneinheit 82 ausgebildet ist, die zwischen dem inneren Stegwandbereich 64 und der gegenüberliegenden stirnseitigen Abschlußfläche der unteren Abschlußplatte 42, an welche die Zungeneinheit elastisch drehbar gelagert ist, angeordnet ist. Im eingesetzten Zustand des Einsatzteiles 81 ist es nun möglich, die nach oben stehende Zungeneinheit 82 mittels eines stabförmigen Elementes derart zwischen dem inneren Stegwandbereich 64 und gegenüberliegenden Stirnseite der unteren Abschlußplatte 42 einzuschwenken. Dadurch wird das Einsatzteil 81 innerhalb des T-Stückes 14 verspannt und in seiner Lage arretiert. Die verspannte Lage der Zungeneinheit 82 ist in Fig. 10 gestrichelt dargestellt.

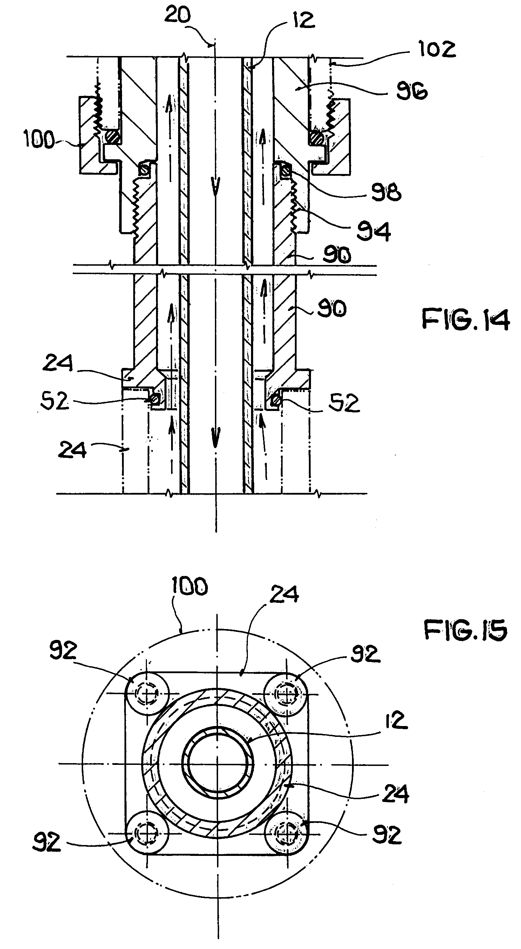

Eine weitere Variante besteht darin, daß vor dem Einsetzen eines Einsatzteiles 83 gemäß den Fig. 12 und 13 eine an die Innenseite der Stegstutzenstirnseite 58 anlegbare Grundplatte 84 in das Stegstutzeninnere einzubringen, deren Durchmesser im wesentlichen dem Innendurchmesser des Stegstutzens 16 entspricht. Die Grundplatte 64 kann mit der Innenseite der Stegstutzenstirnseite verklebt oder verschraubt sein. In ihrem der seitlichen Öffnung 32 gegenüberliegenden Bereich weist die Grundplatte eine dreieckförmige Konsole 86 auf, wobei eine Dreieckseite der Konsole 86 parallel zum inneren unteren Stegwandbereich 64 angeordnet ist. An die untere Abschlußplatte 42 des Einsatzteiles 83 ist ebenfalls eine in ihrer Form der Dreieckskonsole 86 der Grundplatte entsprechend angepaßte Dreieckskonsole 88 angeformt. Beim Einsetzen des Einsatzteiles gelangen kurz bevor die untere Abschlußplatte 42 die eingesetzte Grundplatte 84 erreicht, die geneigte Fläche der Dreieckskonsole 86 der Grundplatte und die geneigte Fläche der Dreieckskonsole 88 der unteren Abschlußplatte 42 miteinander in Kontakt. Beim weiteren Einsetzvorgang gleiten diese beiden geneigten Flächen aufeinander ab, so daß sich zu der in Einsetzrichtung vorhandenen Bewegungskomponente eine zweite Bewegungskomponente einstellt, derart, daß sich das Einsatzteil 83 in Richtung der seitlichen Öffnung 32 bewegt und schließlich im Endzustand sich der im Randbereich der seitlichen Öffnung 32 angeordnete O-Ring an die entsprechenden Innenwandflächen des Stegstutzens flüssigkeitsdicht anlegen. Zur Lagesicherung des Einsatzteiles im eingebauten Zustand ist es auch hier möglich, eine entsprechende Rastvorrichtung vorzusehen, welche jedoch in den Fig. 12, 13 nicht dargestellt ist.

Um zu möglichst einfachen Anschlüssen von Aggregaten an T-Stücke zu gelangen, ist, wie in Fig. 14 zu erkennen, nach einem weiteren ganz wesentlichen Merkmal der Erfindung der quadratische Flansch 24 eines T-Stückes mit einem Zwischenstück 90 verbunden. Dieses Zwischenstück 90 ist als Rohrprofil ausgebildet und weist in seinem dem quadratischen Flansch 24 des T-Stückes zugeordneten Endbereich ebenfalls einen quadratischen Flansch 35 auf. Die Verbindung beider Flansche erfolgt in üblicher Art und Weise mittels vier Schrauben 92. Für eine flüssigkeitdichte Verbindung beider Flansche sorgt eine entsprechend angeordneter O-Ring 94. Die Längsachse 20 des als Rohrprofil 12 ausgebildeten Einsatzteiles liegt in der Längsachse des Zwischenstücks 90. In seinem oberseitigen Endbereich weist das Zwischenstück 90 ein Außengewinde 94 auf. Somit ist ein einfacher Anschluß einer Verbindungseinheit 96 möglich, die hierzu lediglich einen entsprechenden Schraubanschluß mit Innengewinde aufweisen muß.

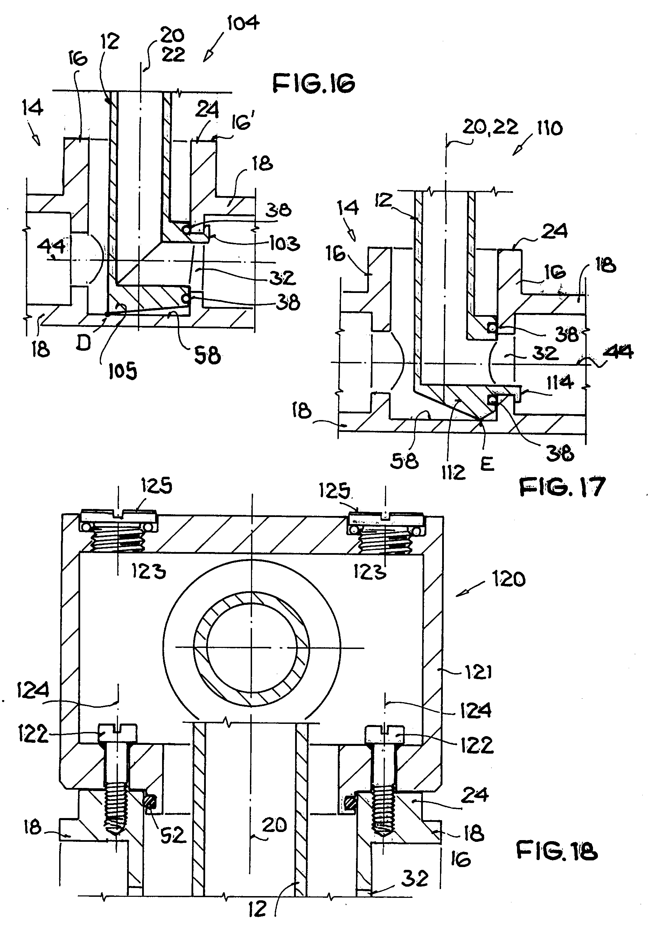

Auch hier sorgt für die flüssigkeitsdichte Verbindung von Zwischenstück 90 und Verbindungseinheit 94 ein O-Ring 98. Die Verbindungseinheit 96 verfügt über eine Überwurfmutter 100 mit Innengewinde, mittels derer wiederum ein im oberen Bereich von Fig. 14 gestrichelt dargestellten Aggregats 102 angeschlossen werden kann. Diese ist in Fig. 15 als gestrichelter Kreis dargestellt. Wird nun noch ein flüssigkeitsdichter Anschluß des Rohrprofiles 12 an die Ein-/Auslaßöffnung des Aggregats 102 hergestellt, ist ein vermischungsfreies Messen der durch das Aggregat 102 fließenden Wassermenge gewährleistet.

Durch die einfache Ausbildung des Endanschlußbereichs des Zwischenstücks 90 ist es möglich, mittels einer konstruktiv einfach aufgebauten Verbindungseinheit eine Vielzahl von bekannten Wasseruhren oder Absperrventilen an ein vorhandenes T-Stück anzuschließen.

In einer weiteren Ausgestaltung der Erfindung weist ein Einsatzteil 104 eine Hakeneinrichtung 103 auf. Diese Hakeneinrichtung 103 ist im Randbereich der seitlichen Öffnung 32 an das Einsatzteil 104 angeformt. Im eingesetzten Zustand des Einsatzteiles 104 kommt die Hakeneinrichtung 103 in einen Bereich oberhalb der Flanschstutzenlängsachse 44 mit dem dort im Anschlußbereich von Stegstutzen 16 und Flanschstutzen 18 vorhandenen inneren Stegwandbereich in Eingriff. Dadurch wird der im Bereich um die seitliche Öffnung 32 angeordnete O-Ring an die entsprechende Gegenfläche angepreßt. Die untere Abschlußplatte 105 des Einsatzteiles 104 ist derart ausgebildet, daß ihre Stirnseite gegenüber der Längsachse 20 des Einsatzteils 104 eine Neigung aufweist, und zwar derart, daß der Winkel zwischen Abschlußfläche und Längsachse des Einsatzteils 20 größer als 90 Grad ist, gemessen im Uhrzeigersinn. Dadurch entsteht auf der der seitlichen Öffnung 32 gegenüberliegenden Seite des Einsatzteiles 104 eine Kante D. Im eingesetzten Zustand kommt die untere Abschlußplatte 105 lediglich über diese Kante D mit der Innenseite 58 der Stegstutzenstirnseite in Kontakt. Zum Herausnehmen des Einsatzteiles 104 wird dieses um die Kante D um wenige Grad gedreht, so daß sich die Hakeneinheit 103 vom betreffenden Innenstegwandbereich löst, wodurch das Einsatzteil 104 nach links bewegt werden kann und anschließend aus dem T-Stück 14 herausgezogen werden kann. Beim Einsetzen des Einsatzteiles 104 ist in umgekehrter Reihenfolge zu verfahren.

Gemäß Fig. 17 ist in einer weiteren Ausgestaltung eines Einsatzteiles 110 im Randbereich der seilichen Öffnung 32 eine Hakeneinheit 114 angeformt, die im eingesetzten Zustand unterhalb der Flanschstutzenlängsachse 44 zu liegen kommt. Auch diese Hakeneinrichtung 114 hintergreift den im Anschlußbereich vorhandenen inneren Stegwandbereich. Auch hier ist die untere Abschlußplatte 112 des Einsatzteiles 110 abgeschrägt, derart, daß der Winkel zwischen der äußeren Abschlußfläche und der Längsachse 20 des Einsatzteiles 110 wenige Grad kleiner als 90 Grad ist. Auch hier liegt im eingesetzten Zustand des Einsatzteiles 110 die untere Abschlußplatte 112 nur entlang einer Drehkante E auf der Innenseite 58 der Stegstutzenstirnseite auf. Zum Herausnehmen des Einsatzteiles 110 wird dieses um die Drehkante E einige wenige Grade entgegen dem Uhrzeigersinn gedreht, bis es zum Lösen der Verbindung der Hakeneinheit 140 mit dem inneren Stegwandbereich kommt. Entsprechend der zum Lösen erforderlichen Gradzahl ist die Außenseite der unteren Abschlußplatte 112 abgeschrägt. Danach kann das Einsatzteil 110 nach links und anschließend nach oben bewegt werden. Das Einsetzen des Einsatzteiles 110 geht in umgekehrter Reihenfolge vor sich.

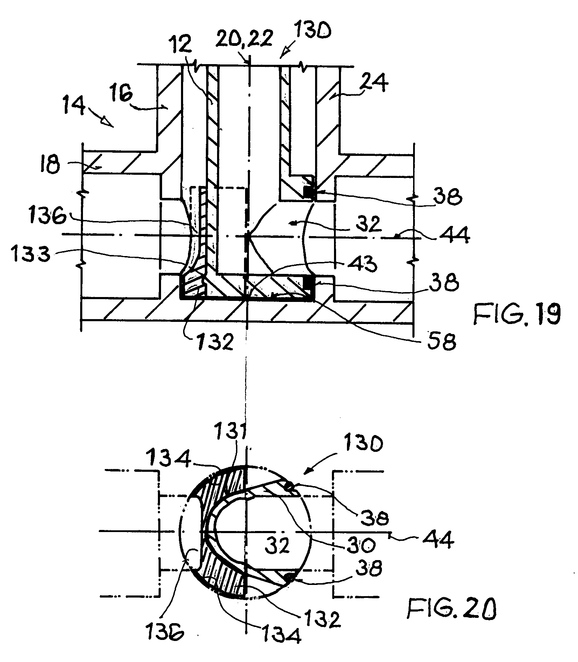

In Fig. 18 ist eine Verbindungseinheit 120 dargestellt, die ein Gehäuse 121 aufweist, das mittels Schrauben 122 mit dem quadratischen Flansch 24 des Stegstutzens flüssigkeitsdicht verbunden ist. Von dem T-Stück selbst ist nur die obere Hälfte dargestellt. Ebenfalls wurde auf eine genaue Darstellung des innerhalb des Gehäuses 121 der Verbindungseinheit 120 vorhandenen Kanalsystems verzichtet. In der Mitte des Gehäuses 121 der Verbindungseinheit 120 sind lediglich die Ein- bzw. Auslaßöffnungen eines nicht näher dargestellten Aggregats mittels zweier konzentrischer Kreisringe dargestellt. Wie bereits erwähnt wird das Gehäuse direkt mit dem T-Stück verschraubt. Hierzu weist das Gehäuse auf der der Anschlußseite von Gehäuse 121 und Stegstutzen 16 gegenüberliegenden Seite Öffnungen 123 auf, die in Verlängerung der Schraubachsen 124 liegen. Für die Montage der Verbindungseinheit 120 sind somit die Schrauben 122 von außen frei zugänglich. Nach dem Herstellen des Anschlusses der Verbindungseinheit 120 mit dem Stegstutzen 16 werden die Öffnungen 123 mittels Verschlußkappen 125 flüssigkeitsdicht verschlossen. Die Flüssigkeitsdichtheit der Verbindung des Gehäuses 121 mit den Verschlußkappen 125 wird ebenso wie die Flüssigkeitsdichtheit der Verbindung des Gehäuses 121 mit dem Stegstutzen durch das Anordnen von O-Ringen gewährleistet, was im Rahmen einfachen technischen Handelns liegt und deshalb an dieser Stelle nicht näher erläutert zu werden braucht.

Mit einer derartigen Verbindungseinheit ist es möglich, auf einfache Art und Weise ohne Einschalten eines Zwischenelementes ein Aggregat an ein T-Stück eines Rohrleitungssystems anzuschließen.

Bei dem in Fig. 19 und 20 dargestellten Einsatzteil 130 ist auf der der seitlichen Öffnung 32 gegenüberliegenden Seite des Einsatzteiles 130 ein Formteil 132 angeordnet, das sich im eingesetzten Zustand auf Bereiche der Außenwandung 131 des Rohrprofils 12 und auf diesen Bereichen gegenüberliegende Innenwandbereiche 134 des Stegstutzens abstützt. Eine im Bereich der Ein-/Austrittsöffnung vorhandene Ausnehmung 136 des Formteils 132 ist derart ausgestaltet, daß der durchfließenden Flüssigkeit möglichst wenig hydraulischer Widerstand entgegensteht. Zur Lagesicherung des Formteils 132 weist dasselbe eine Rastnut 133 auf, in die bei eingesetztem Formteil 132 eine entsprechend ausgebildete Rastnase eingreift, die an die Außenwandung 131 des Rohrprofiles 12 angeformt ist.

In einer bevorzugten Ausgestaltung der Erfindung ist das Formteil einstückig mit dem Einsatzteil verbunden. Dies ist eine besonders kostengünstige Alternative, da sich gegenüber dem o.a. Ausführungsbeispiel ein geringerer Herstellaufwand, eine vereinfachte Montage und eine, da nur ein Teil gehandhabt werden muß, günstigere Lagerhaltung ergibt.

## Patentansprüche

1. An ein Rohrleitungssystem angeschlossenes T-Stück (14) mit einem Einsatzteil (10, 67, 75, 81, 83, 104, 110, 130),
- wobei das T-Stück einen Stegstutzen (16) und zwei sich gegenüberliegende stumpf an den Stegstutzen angeformte Flanschstutzen (18) aufweist,
- der Stegstutzen (16) über die Flanschstutzen (18) hinausragt, derart, daß im Inneren des Stegstutzens (16) ein in die Ein-/Auslaßöffnungen der beiden Flanschstutzen (18) hineinragender Stegwandbereich vorhanden ist, mit
- einem Rohrprofil (12), das im eingesetzten Zustand im Bereich des Stegstutzens (16), außerhalb des Kreuzungsbereichs mit den beiden Flanschstutzen, vorhanden ist und dessen Außendurchmesser kleiner ist als der Innendurchmesser des Stegstutzens des T-Stücks, und mit
- einer Öffnung (32), die bei in das T-Stück eingesetztem Zustand der Öffnung eines Flanschstutzens (18) zugewandt ist,
- die den Flanschstutzen (18) zugewandte Stirnseite des Rohrprofiles (12) eine untere Abschlußplatte (42) aufweist, die im eingesetzten Zustand zwischen den Stegwandbereichen angeordnet ist, die im Bereich der Einlaß- und Auslaßöffnungen der Flanschstutzen (18) vorhanden sind,
- wobei das Einsatzteil (10, 67, 75, 81, 83, 104, 110, 130) in dem dem Flanschstutzen (18) zugewandten Endbereich einen seitlichen Stutzen (30) mit einer seitlichen Öffnung (32) aufweist, die einer Ein-/Auslaßöffnung des Anschlußbereiches eines Steg- und Flanschstutzens im eingesetzten Zustand gegenüberliegt, und
- wobei das Einsatzteil (10, 67, 75, 81, 83, 104, 110, 130) im Bereich um die seitliche Öffnung ein Dichtmittel (38) aufweist, das sich bei in das T-Stück eingesetztem Einsatzteil mittels einer Arretiereinrichtung (40, 68, 76, 82, 86, 103, 114, 132) an dem Stegwandbereich dieser Ein-/Auslaßöffnung flüssigkeitsdicht anlegt, so daß eine Vermischung der im Inneren des Rohrprofils (12) zu-/abfließenden Flüssigkeitsmenge mit der zwischen Stegstutzeninnenwand und Rohrprofilaußenwand ab-/zufließenden Flüssigkeitsmenge nicht stattfindet,
**dadurch gekennzeichnet,** daß
- das Dichtmittel (38) des Einsatzteils (10, 67, 75, 81, 83, 104, 110, 130) am stirnseitigen Rand des Stutzens (30) angeordnet und gegen den die Öffnung (32) umgebenden Stegwandinnenbereich anpreßbar ist, und daß
- das Einsatzteil (10, 67, 75, 81, 83, 104, 110, 130) und seine Dichtflächen innerhalb des Lichtraumprofils des Stegstutzens (16) vorhanden sind.

2. Einsatzteil (10, 67, 75, 81, 83) nach Anspruch 1,
**dadurch gekennzeichnet,** daß
die Arretiereinrichtung (40, 68, 76, 82, 86) an der unteren Abschlußplatte (42) des Einsatzteiles (10, 67, 75, 81, 83) gegenüber der seitlichen Öffnung (32) angeordnet ist und an dem in die Ein-/Auslaßöffnungen hineinragenden Stegwandbereich (64) abstützbar ist.

3. Einsatzteil nach Anspruch 2,
**dadurch gekennzeichnet,** daß
die Arretiereinrichtung als Spreizeinheit mit einer Spreizschraube ausgebildet ist.

4. Einsatzteil (67) nach Anspruch 2,
**dadurch gekennzeichnet,** daß
die Arretiereinrichtung als Exzentereinheit mit einer exzentrisch drehbar angeordneten Exzenterscheibe (68) ausgebildet ist, deren Drehachse (14) parallel zur Rohrprofillängsachse (20) des Einsatzteiles (67) angeordnet ist.

5. Einsatzteil (75) nach Anspruch 2,
**dadurch gekennzeichnet,** daß
zwischen dem in die Ein-/Auslaßöffnungen hineinragenden Stegwandbereich und der unteren Abschlußplatte die Arretiereinrichtung als Keileinheit mit einem eindrückbaren Keil (76) ausgebildet ist.

6. Einsatzteil (75) nach Anspruch 5,
**dadurch gekennzeichnet,** daß
der Keil (76) eine Rastnase (80) aufweist, die bei eingedrücktem Keil (76) in eine entsprechende Ausnehmung des Einsatzteiles (75) eingreift.

7. Einsatzteil (81) nach Anspruch 2,
**dadurch gekennzeichnet,** daß
die Arretiereinrichtung als am Einsatzteil (81) elastisch drehbar gelagerte Zungeneinheit (82) ausgebildet ist.

8. Einsatzteil (83) nach Anspruch 2,
**dadurch gekennzeichnet,** daß
es über eine im Bereich der inneren Stirnseite (58) des Stegstutzens angeordnete Grundplatte (84) verfügt, die eine im Bereich der Arretiereinrichtung vorhandene Konsole (86) aufweist, wobei die Konsole (86) eine zur Arretiereinrichtung hin abfallende schräge Fläche und die Arretiereinrichtung eine entsprechend ausgebildete Gegenfläche besitzt.

9. Einsatzteil (83) nach Anspruch 8,
**dadurch gekennzeichnet,** daß
die Konsole (86) der Grundplatte eine Rastkante und die Arretiereinrichtung eine entsprechende Rastnut aufweisen, die bei eingesetztem Einsatzteil (83) in Eingriffstellung kommen.

10. Einsatzteil (10, 67, 75, 81, 83, 104, 110) nach Anspruch 1,
**dadurch gekennzeichnet,** daß
das Dichtmittel als O-Ring (38) ausgebildet ist.

11. Einsatzteil (10, 67, 75, 81, 83, 104, 110) nach Anspruch 1,
**dadurch gekennzeichnet,** daß
das Dichtmittel als Lippendichtung ausgebildet ist.

12. Einsatzteil nach Anspruch 2,
**dadurch gekennzeichnet,** daß
die Arretiereinrichtung als starre Rechteckkonsole an die untere Abschlußplatte (42) angeformt ist, und innerhalb des seitlichen Öffnung des seitlichen Stutzens (30) entlang der Flanschstutzenlängsachse (44) verschiebbare, flüssigkeitsdicht gelagerte um die seitliche Öffnung (32) bildende Hülse angeordnet ist, wobei auf der dem Rohrprofil (12) des Einsatzteiles (10) zugewandten Innenseite der Hülse ein Steg angeordnet ist, an den eine Federzunge anschließt, die auf der der seitlichen Öffnung gegenüberliegenden Innenseite des Rohrprofiles (12) des Einsatzteiles abstützbar ist.

13. Einsatzteil nach Anspruch 1,
**dadurch gekennzeichnet,** daß
der seitliche Stutzen (30) eine vom Rohrprofil (12) des Einsatzteiles unabhängige Einheit bildet und das Rohrprofil (12) mit dem seitlichen Stutzen (30) verschraubbar ausgebildet ist, wobei das Rohrprofil (12) ein Außengewinde und der seitliche Stutzen (30) ein entsprechendes Innengewinde aufweist.

## Claims

1. T-piece (14) connected to a pipeline system and having an insert part (10, 67, 75, 81, 83, 104, 110, 130),
- the T-piece exhibiting a web connection stub (16) and two mutually opposite flange connection stubs (18) which are integrally formed flushed against the web connection stub,
- the web connection stub (16) projecting beyond the flange connection stubs (18) such that, in the interior of the web connection stub (16), there is a web-wall region which projects into the inlet/outlet openings of the two flange connection stubs (18), having
- a pipe profile (12) which, in the inserted state, is provided in the region of the web connection stub (16), outside the region of intersection with the two flange connection stubs, and of which the external diameter is smaller than the internal diameter of the web connection stub of the T-piece, and having
- an opening (32) which, when the insert part is inserted into the T-piece, faces the opening of a flange connection stub (18),
- that end side of the pipe profile (12) which faces the flange connection stubs (18) exhibiting a bottom termination plate (42) which, in the inserted state, is arranged between the web-wall regions which are provided in the region of the inlet and outlet openings of the flange connection stubs (18),
- the insert part (10, 67, 75, 81, 83, 104, 110, 130) exhibiting, in the end region facing the flange connection stub (18), a lateral connection stub (30) with a lateral opening (32) which is located opposite an inlet/outlet opening of the connection region of a web and flange connection stub in the inserted state, and
- the insert part (10, 67, 75, 81, 83, 104, 110, 130) exhibiting, in the region around the lateral opening, a sealant (38) which, when the insert part is inserted into the T-piece, rests in a liquid-tight manner, by means of an arresting device (40, 68, 76, 82, 86, 103, 114, 132), against the web-wall region of said inlet/outlet opening, with the result that mixing of the quantity of liquid which flows in/out in the interior of the pipe profile (12) with the quantity of liquid which flows out/in between the inner wall of the web connection stub and the outer wall of the pipe profile does not take place, characterized in that
- the sealant (38) of the insert part (10, 67, 75, 81, 83, 104, 110, 130), is arranged at the end-side border of the connection stub (30) and can be pressed against the web-wall inner region surrounding the opening (32), and in that
- the insert part (10, 67, 75, 81, 83, 104, 110, 130) and its sealing surfaces are provided within the clear profile of the web connection stub (16).

2. Insert part (10, 67, 75, 81, 83) according to Claim 1, characterized in that the arresting device (40, 68, 76, 82, 86) is arranged on the bottom termination plate (42) of the insert part (10, 67, 75, 81, 83), opposite the lateral opening (32), and can be supported on the web-wall region (64) projecting into the inlet/outlet openings.

3. Insert part according to Claim 2, characterized in that the arresting device is designed as an expansion unit with an expansion screw.

4. Insert part (67) according to Claim 2, characterized in that the arresting device is designed as an eccentric unit with an eccentrically rotatably arranged eccentric disc (68), of which the axis of rotation (74) is arranged parallel to the pipe-profile longitudinal axis (20) of the insert part (67).

5. Insert part (75) according to Claim 2, characterized in that, between the bottom termination plate and the web-wall region projecting into the inlet/outlet openings, the arresting device is designed as a wedge unit with a press-in wedge (76).

6. Insert part (75) according to Claim 5, characterized in that the wedge (26) exhibits a latching lug (80) which, when the wedge (76) is pressed in, engages into a corresponding recess in the insert part (75).

7. Insert part (81) according to Claim 2, characterized in that the arresting device is designed as a tongue unit (82) which is mounted elastically rotatably on the insert part (81).

8. Insert part (83) according to Claim 2, characterized in that it has a base plate (84) which is arranged in the region of the inner end side (58) of the web connection stub and exhibits a bracket (86) provided in the region of the arresting device, the bracket (86) having an inclined surface which slopes down to the arresting device, and the arresting device having a correspondingly designed mating surface.

9. Insert part (83) according to Claim 8, characterized in that the bracket (86) of the baseplate exhibits a latching edge and the arresting device exhibits a corresponding latching groove, these coming into engagement when the insert part (83) is inserted.

10. Insert part (10, 67, 75, 81, 83, 104, 110) according to Claim 1, characterized in that the sealant is designed as an O-ring (38).

11. Insert part (10, 67, 75, 81, 83, 104, 110) according to Claim 1, characterized in that the sealant is designed as a lip seal.

12. Insert part according to claim 2, characterized in that the arresting device is integrally formed, as a rigid rectangular bracket, on the bottom termination plate (42), and a sleeve which can be displaced along the longitudinal axis (44) of the flange connection stub, is mounted in a liquid- tight manner and forms the lateral opening (32) is arranged within the lateral connection stub (30), there being arranged, on the sleeve inner side facing the pipe profile (12) of the insert part (10), a web which is adjoined by a resilient tongue which can be supported on the inner side, located opposite the lateral opening, of the pipe profile (12) of the insert part.

13. Insert part according to Claim 1, characterized in that the lateral connection stub (30) forms a unit which is independent of the pipe profile (12) of the insert part, and the pipe profile (12) is designed such that it can be screwed to the lateral connection stub (30), the pipe profile (12) exhibiting an external thread and the lateral connection stub (30) exhibiting a corresponding internal thread.

## Revendications

1. Pièce en T (14) raccordée à un système de conduits tubulaires et munie d'une pièce d'insertion (10, 67, 75, 81, 83, 104, 110, 130),
- la pièce en T présentant un manchon de membrure (16) et deux manchons d'ailes (18) mutuellement opposés, ménagés bord à bord d'un seul tenant avec le manchon de membrure,
- le manchon de membrure (16) faisant saillie au-delà des manchons d'ailes (18), de telle sorte qu'une région de paroi de la membrure, s'engageant dans les orifices d'admission/sortie des deux manchons d'ailes (18), se trouve dans l'espace interne du manchon de membrure (16), comportant
- un profilé tubulaire (12) qui, à l'état inséré, se trouve dans la région du manchon de membrure (16), en dehors de la zone de croisement avec les deux manchons d'ailes, et dont le diamètre extérieur est plus petit que le diamètre intérieur du manchon de membrure de la pièce en T, et
- une ouverture (32) qui, à l'état inséré dans la pièce en T, est tournée vers l'ouverture d'un manchon d'aile (18),
- la face extrême du profilé tubulaire (12), tournée vers les manchons d'ailes (18), présentant une plaque inférieure de fermeture (42) interposée, à l'état inséré, entre les régions de paroi de la membrure qui sont situées au voisinage des orifices d'admission et de sortie des manchons d'ailes (18),
- la pièce d'insertion (10, 67, 75, 81, 83, 104, 110, 130) comportant, dans la région extrême tournée vers le manchon d'aile (18), un embout latéral (30) muni d'une ouverture latérale (32) située, à l'état inséré, en vis-à-vis d'un orifice d'admission/sortie de la zone de raccordement d'un manchon de membrure et d'aile, et
- la pièce d'insertion (10, 67, 75, 81, 83, 104, 110, 130) étant pourvue, dans la région entourant l'ouverture latérale, d'un moyen d'étanchement (38) qui vient s'appliquer de manière étanche aux fluides lorsque la pièce d'insertion est intégrée dans la pièce en T, au moyen d'un dispositif d'arrêt (40, 68, 76, 82, 86, 103, 114, 132), contre la région de paroi de la membrure de cet orifice d'admission/sortie, de sorte qu'il ne s'opère aucun mélange de la quantité de fluide, affluant/sortant dans l'espace interne du profilé tubulaire (12), avec la quantité de fluide sortant/affluant entre la paroi interne du manchon de membrure et la paroi externe du profilé tubulaire,
caractérisée par le fait que
- le moyen d'étanchement (38) de la pièce d'insertion (10, 67, 75, 81, 83, 104, 110, 130) est disposé sur le bord extrême de l'embout (30), et peut être comprimé contre la région interne de la paroi de la membrure qui entoure l'ouverture (32) ; et que
- la pièce d'insertion (10, 67, 75, 81, 83, 104, 110, 130) et ses surfaces d'étanchement se trouvent à l'intérieur du profil de l'espace libre du manchon de membrure (16).

2. Pièce d'insertion (10, 67, 75, 81, 83) selon la revendication 1,
caractérisée par le fait que
le dispositif d'arrêt (40, 68, 76, 82, 86) est implanté sur la plaque inférieure de fermeture (42) de ladite pièce d'insertion (10, 67, 75, 81, 83), en vis-à-vis de l'ouverture latérale (32), et peut prendre appui sur la région de paroi (64) de la membrure s'engageant dans les orifices d'admission/sortie.

3. Pièce d'insertion selon la revendication 2,
caractérisée par le fait que
le dispositif d'arrêt est réalisé sous la forme d'un ensemble unitaire écartable, muni d'une vis d'écartement.

4. Pièce d'insertion (67) selon la revendication 2,
caractérisée par le fait que
le dispositif d'arrêt est réalisé sous la forme d'un ensemble unitaire à excentrique, muni d'un disque (68) à excentrique qui est monté à rotation excentrée, et dont l'axe de rotation (14) est disposé parallèlement à l'axe (20) du profilé tubulaire de ladite pièce d'insertion (67).

5. Pièce d'insertion (75) selon la revendication 2,
caractérisée par le fait que
le dispositif d'arrêt est réalisé, entre la plaque inférieure de fermeture et la région de paroi de la membrure s'engageant dans les orifices d'admission/sortie, sous la forme d'un ensemble unitaire à coin muni d'un coin enfonçable (76).

6. Pièce d'insertion (75) selon la revendication 5,
caractérisée par le fait que
le coin (76) présente un mentonnet encrantable (80) qui pénètre, lorsque ledit coin (76) est enfoncé, dans un évidement correspondant de ladite pièce d'insertion (75).

7. Pièce d'insertion (81) selon la revendication 2,
caractérisée par le fait que
le dispositif d'arrêt est réalisé sous la forme d'un ensemble unitaire à languette (82), monté élastiquement à rotation dans ladite pièce d'insertion (81).

8. Pièce d'insertion (83) selon la revendication 2,
caractérisée par le fait
qu'elle est équipée d'une plaque d'embase (84) disposée dans la région de la face extrême intérieure (58) du manchon de membrure, et munie d'une console (86) située dans la région du dispositif d'arrêt, la console (86) possédant une surface oblique déclinant en direction du dispositif d'arrêt, et ledit dispositif d'arrêt comportant une surface complémentaire de réalisation correspondante.

9. Pièce d'insertion (83) selon la revendication 8,
caractérisée par le fait que
la console (86) de la plaque d'embase et le dispositif d'arrêt présentent, respectivement, une arête encrantable et une gorge d'encrantage correspondante, lesquelles prennent une position de venue en prise lorsque la pièce d'insertion (83) est intégrée.

10. Pièce d'insertion (10, 67, 75, 81, 83, 104, 110) selon la revendication 1,
caractérisée par le fait que
le moyen d'étanchement est réalisé sous la forme d'une bague torique (38).

11. Pièce d'insertion (10, 67, 75, 81, 83, 104, 110) selon la revendication 1,
caractérisée par le fait que
le moyen d'étanchement est réalisé sous la forme d'une garniture d'étanchement à lèvre(s).

12. Pièce d'insertion selon la revendication 2,
caractérisée par le fait que
le dispositif d'arrêt est ménagé solidairement sur la plaque inférieure de fermeture (42), sous la forme d'une console rectangulaire rigide, et l'espace interne de l'ouverture latérale de l'embout latéral (30) renferme une douille pouvant coulisser le long de l'axe longitudinal (44) des manchons d'ailes, montée avec étanchéité aux fluides, et formant l'ouverture latérale (32), la face interne de la douille, tournée vers le profilé tubulaire (12) de la pièce d'insertion (10), présentant une nervure à laquelle se rattache une languette élastique pouvant prendre appui sur la face interne, située en vis-à-vis de l'ouverture latérale, du profilé tubulaire (12) de ladite pièce d'insertion.

13. Pièce d'insertion selon la revendication 1,
caractérisée par le fait que
l'embout latéral (30) forme un ensemble unitaire indépendant du profilé tubulaire (12) de ladite pièce d'insertion, et ledit profilé tubulaire (12) est réalisé avec faculté de vissage sur l'embout latéral (30), le profilé tubulaire (12) et l'embout latéral (30) comportant, respectivement, un filetage extérieur et un filetage intérieur correspondant.
